# EUROPEAN PATENT APPLICATION

(11) **EP 2 135 893 A1**
(43) Date of publication of application: **23.12.2009**
(21) Application number: 08251825.9
(22) Date of filing: 27.05.2008
(51) Int. Cl.: C08L 3/02, C08L 97/02, C08J 5/04, B27N 3/04, D21C 5/00

(54) **Method for making a biodegradable fibrous material composition**

(71) Applicant: Wu, Jui-Liang, Tainan Hsien (TW)
(72) Inventor: Wang, Philip, Taichung Hsien (TW)
(74) Representative: Pratt, David Martin

(57) **Abstract**

A method for making a biodegradable fibrous material composition includes: (a) grinding raw bamboo into coarse raw bamboo particulates; (b) drying the raw bamboo particulates; (c) grinding the raw bamboo particulates into fine bamboo powder; (d) mixing the bamboo powder with water to result in a mixture; (e) stirring the mixture at a speed ranging from 1000 to 1800 rpm/min, which leads to formation of softened bamboo fibers; and (f) stirring a mixture of the softened bamboo fibers, a binder, a solidifying agent, a water repellent, starch and water at a speed ranging from 1000 to 1800 rpm/min.

## Description

This invention relates to a method for making a biodegradable fibrous material composition, more particularly to a method involving stirring a mixture of bamboo powder and water at a speed ranging from 1000-1800rps/min.

U.S. Patent No. 7,132,463 discloses a conventional biodegradable composition containing 30-50 parts by weight of a fibrous powder, such as fibers derived from bamboo, wood, straw, sugarcane, woody stem, etc., and 5-50 parts by weight of acrylate copolymer. A biodegradable article, such as a food container, made from the conventional biodegradable composition is capable of improving water resistance and durability. However, when the bamboo fiber is used as the material for the fibrous powder in the biodegradable composition, problems, such as poor mixing with other materials, poor flowability, and undesired carbonization, occur.

Therefore, an object of the present invention is to provide a method for making a biodegradable fibrous material composition that can overcome the aforesaid drawbacks associated with the prior art.

According to the present invention, a method for making a biodegradable fibrous material composition comprises: (a) grinding raw bamboo into coarse raw bamboo particulates; (b) drying the raw bamboo particulates; (c) grinding the raw bamboo particulates into fine bamboo powder; (d) mixing the bamboo powder with water to result in a mixture; (e) stirring the mixture at a speed ranging from 1000 to 1800 rpm/min so as to soften fibers of the bamboo powder, which leads to formation of softened bamboo fibers; and (f) stirring a mixture of the softened bamboo fibers, a binder, a solidifying agent, a water repellent, starch and water at a speed ranging from 1000 to 1800 rpm/min so as to form the biodegradable fibrous material composition.

Other features and advantages of the present invention will become apparent in the following detailed description of the preferred embodiment of this invention, with reference to the accompanying drawing, in which:

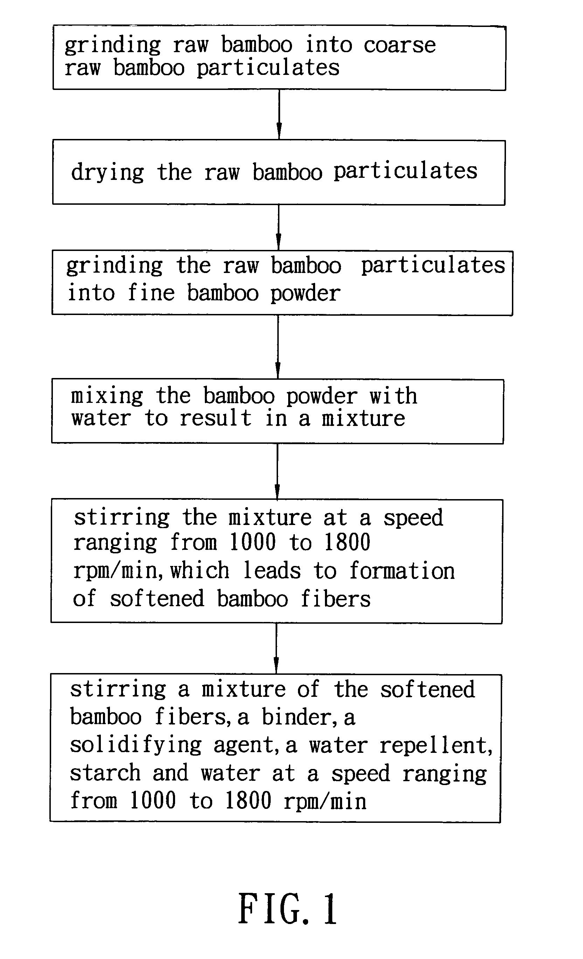

Fig. 1 is a flowchart to illustrate consecutive steps of the preferred embodiment of a method for making a biodegradable fibrous material composition according to this invention.

The preferred embodiment of the biodegradable fibrous material composition according to this invention includes: 35-55wt% of a bamboo fiber; 25-50wt% of a binder; 0.4-0.8wt% of a solidifying agent; 0.2-0.6wt% of a water repellent; 10-20wt% of starch; and 0.5-1.5wt% of water.

Preferably, the solidifying agent is selected from the group consisting of polyamide, epoxy chloropropane, a thermosetting resin, and combinations thereof. In this embodiment, the solidifying agent is a cationic intensifier, which is a thermosetting resin.

Preferably, the water repellent is selected from the group consisting of a cationic neutral sizing agent, and an acrylate polymer.

Preferably, the binder contains one of polyvinyl alcohol and polyvinyl acetate.

In this embodiment, the binder is made from a mixture of polyvinyl acetate and water. Alternatively, the binder can be made from a mixture of polyvinyl alcohol, water, starch and pulp.

Fig. 1 illustrates the preferred embodiment of a method for making the biodegradable fibrous material composition according to this invention. The method includes: (a) grinding raw bamboo into coarse raw bamboo particulates; (b) drying the raw bamboo particulates; (c) grinding the raw bamboo particulates into fine bamboo powder; (d) mixing the bamboo powder with 2wt%water to result in a mixture; (e) stirring the mixture at a speed ranging from 1000 to 1800 rpm/min so as to soften and remove starch from fibers of the bamboo powder, which leads to formation of softened bamboo fibers; and (f) stirring a mixture of the softened bamboo fibers, the binder, the solidifying agent, the water repellent, the starch and water at a speed ranging from 1000 to 1800 rpm/min so as to form the biodegradable fibrous material composition.

Preferably, the raw bamboo is selected from maturation-stage bamboos.

Preferably, the fine bamboo powder obtained in step (c) has a particle size ranging from 60-120 meshes and contains 25-35%wt water based on the total weight.

In this embodiment, softening of the fibers of the bamboo powder in step (e) is conducted under a temperature ranging from 35-45°C for 5-30min.

The biodegradable fibrous material composition can be used as a material for making articles, such as biodegradable food containers. In the process of forming an article, the biodegradable fibrous material composition is molded using a mold under a temperature ranging from 135-140°C.

It is noted that the bamboo fiber thus formed has an excellent flowability, which permits uniform mixing with other materials, which, in turn, enhances the durability of the article made from the biodegradable fibrous material composition and prevents undesired carbonization from occurring during the article molding process.

## Claims

1. A method for making a biodegradable fibrous material composition **characterized by**:
(a) grinding raw bamboo into coarse raw bamboo particulates;
(b) drying the raw bamboo particulates;
(c) grinding the raw bamboo particulates into fine bamboo powder;
(d) mixing the bamboo powder with water to result in a mixture;
(e) stirring the mixture at a speed ranging from 1000 to 1800 rpm/min so as to soften fibers of the raw bamboo powder, which leads to formation of softened bamboo fibers; and
(f) stirring a mixture of the softened bamboo fibers, a binder, a solidifying agent, a water repellent, starch and water at a speed ranging from 1000 to 1800 rpm/min so as to form the biodegradable fibrous material composition.

2. The method of Claim 1, **characterized in that** the bamboo powder has a particle size ranging from 60-120 meshes.

3. The method of Claim 1, **characterized in that** the solidifying agent is selected from the group consisting of polyamide, epoxy chloropropane, a thermosetting resin, and combinations thereof.

4. The method of Claim 3, **characterized in that** the solidifying agent is a cationic intensifier.

5. The method of Claim 1, **characterized in that** the water repellent is a cationic neutral sizing agent.

6. The method of Claim 1, **characterized in that** the binder contains polyvinyl alcohol.

7. The method of Claim 1, **characterized in that** softening of the fibers of the bamboo powder in step (e) is conducted under a temperature ranging from 35-45 °C.
